# FASCICULE DE BREVET EUROPEEN

(11) **EP 0 596 819 B1**
(45) Date de publication et mention de la délivrance du brevet: **29.01.1997**
(21) Numéro de dépôt: 93420441.3
(22) Date de dépôt: 03.11.1993
(51) Int. Cl.: B23B 13/12, B23B 31/20

(54) **Dispositif de guidage des barres sur une machine à décolleter**
Stabführungsvorrichtung für einem Drehautomaten
Guiding device of bars on an automatic lathe

(30) Priorité: 06.11.1992 FR 9213570
(43) Date de publication de la demande: 11.05.1994
(73) Titulaire: Marchand, Alain, F-74460 Marnaz (FR)
(72) Inventeur: Marchand, Alain, F-74460 Marnaz (FR)
(74) Mandataire: Poncet, Jean-François

(56) Documents cités:
- CH-A- 211 150
- CH-A- 341 045
- CH-A- 550 042
- DE-A- 3 600 445
- DE-C- 814 985

## Description

La présente invention concerne les machines à décolleter à poupée mobile selon le preambule de la revendication 1 et comme connû du document CH-A-341 045. Dans de telles machines un dispositif de guidage de barre est inséré entre la butée de jet de barre et la zone occupée par les outils de coupe.

D'un côté de la zone occupée par les outils, la barre en cours d'usinage est tenue dans la pince de poupée mobile. De l'autre côté de la zone des outils, la barre est guidée par le dispositif de guidage de barre.

Les dispositifs de guidage de barre les plus couramment utilisés sont des canons de guidage à diamètre fixe dans lesquels la barre en cours d'usinage peut coulisser axialement. On choisit le diamètre de canon qui correspond sensiblement au diamètre de la barre en cours d'usinage.

Pour améliorer le maintien de la barre, on a depuis longtemps proposé des canons de guidage dont le diamètre peut être modifié selon une plage de variation limitée. Dans ce cas, le canon est fendu longitudinalement et des moyens de serrage permettent de resserrer plus ou moins radialement le canon. Ces canons de guidage à diamètre réglable sont décrits notamment dans CH-A-211 150 ou dans CH-A-341 045.

Par le fait que la barre en cours d'usinage tourne axialement dans le canon, il se produit une usure assez rapide du canon, et donc une modification de son diamètre. Pour retarder l'usure, on a depuis longtemps proposé de réaliser la surface interne en divers métaux durs, comme décrit dans les documents précités, ou par une couche interne en carbure de tungstène brasée dans un support métallique.

Un tel canon à couche interne en carbure de tungstène présente une meilleure longévité. Toutefois, on constate qu'un tel canon présente néanmoins une usure assez rapide, et de forts risques de grippage des barres en inox ou en titane à usiner. Il en est de même des canons à surfaces intérieures de guidage en métaux durs, dont la longévité reste insuffisante car les matériaux durs qui ont été proposés ne permettent pas de résoudre le problème de l'usure et/ou du grippage des barres, notamment lorsque ces barres sont en certains métaux.

Pour éviter le grippage, qui est un phénomène connu, on a proposé des canons tournants. Dans ce cas, le canon est monté à rotation axiale dans un support. Mais le problème est alors l'existence d'un jeu entre le canon et son support fixe. Ce jeu entraine des défauts de concentricité. En outre, le canon tournant est nécessairement plus long qu'un canon fixe, ce qui réduit la capacité d'usinage en longueur de la machine. Egalement, un tel canon tournant est nettement plus onéreux qu'un canon fixe.

Le problème proposé par la présente invention est de concevoir une nouvelle structure de dispositif de guidage qui permette un guidage de barre en tout métal et notamment en inox ou en titane, sans risque de grippage, qui présente une résistance nettement accrue à l'usure, qui n'augmente pas l'encombrement du dispositif pour conserver toute la capacité d'usinage maximale en longueur de la machine, et qui soit peu onéreuse.

On connaît a priori des matières qui sont plus dures que le carbure de tungstène, et par exemple le carbure de silicium. On sait toutefois qu'une telle matière est très fragile, de sorte qu'elle n'est pas a priori adaptée à la constitution d'une pièce telle qu'un canon de guidage qui est susceptible de subir des contraintes mécaniques de type choc et/ou vibration. En outre, une telle matière ne permet pas une fixation par brasure, qui est la technique habituelle pour fixer une couche intérieure en carbure de tungstène dans un support métallique.

L'invention se propose donc de résoudre ce problème, en prévoyant d'une part l'utilisation nouvelle du carbure de silicium comme matériau dur formant la surface intérieure de guidage du canon, en prévoyant d'autre part des moyens particuliers permettant la constitution et le montage d'un canon à couche intérieure en carbure de silicium, et permettant d'éviter la rupture ou dégradation de la couche en carbure de silicium par les chocs ou vibrations.

Pour cela, le dispositif de guidage selon l'invention comprend un canon de guidage à canaux de lubrification et à surface intérieure cylindrique de guidage de barre dont le diamètre utile est fixe ou réglable, dans lequel :
- le canon de guidage comprend une couche intérieure en carbure de silicium entourée d'un corps métallique, ladite couche intérieure formant ladite surface intérieure cylindrique de guidage de barre,
- la couche intérieure en carbure de silicium est solidarisée dans le corps métallique par une couche intermédiaire de colle.

On a pu constater que les risques de rupture de la couche en carbure de silicium sont encore nettement diminués lorsque l'épaisseur du corps métallique est au moins le triple de l'épaisseur de la couche intérieure en carbure de silicium.

Des défauts d'assemblage entre la couche intérieure en carbure de silicium et le corps métallique ont pu être évités en utilisant une colle pouvant tenir convenablement à des températures supérieures à 200° Celsius. On utilise pour cela par exemple une colle telle que le produit distribué sous la référence S648 par la société LOCTITE.

D'autres objets, caractéristiques et avantages de la présente invention ressortiront de la description suivante de modes de réalisation particuliers, faite en relation avec les figures jointes, parmi lesquelles :
- la figure 1 est une vue schématique en perspective d'une structure traditionnelle de machine à décolleter, montrant les principaux organes de tenue de la barre en cours d'usinage ;
- la figure 2 est une demi-coupe longitudinale d'un canon de guidage à diamètre fixe selon l'invention ; et
- la figure 3 est une vue de côté éclatée d'un canon de guidage à diamètre réglable selon l'invention.

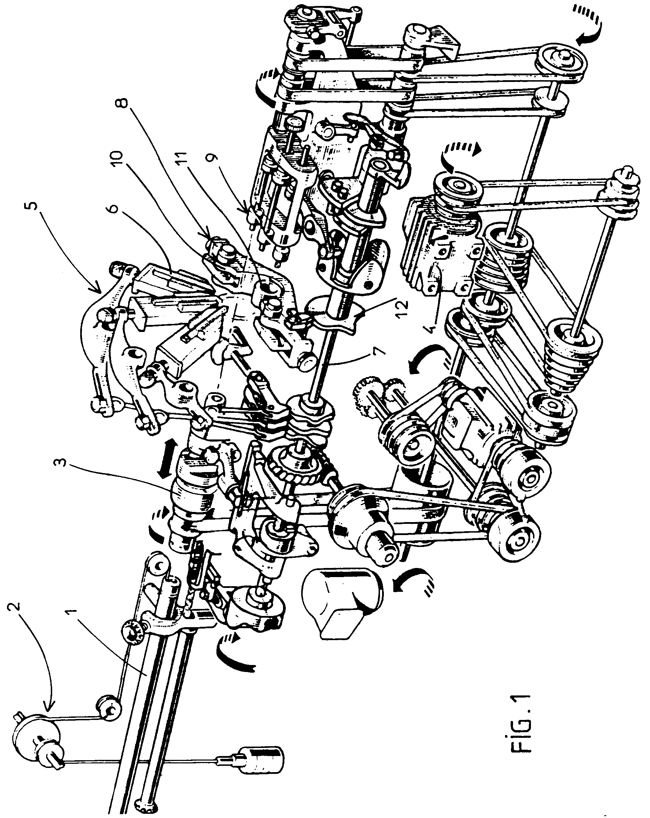

Dans le mode de réalisation traditionnel représenté sur la figure 1, une machine à décolleter comprend notamment un tube guide barre 1 associé à un dispositif d'avance de barre 2. La barre à usiner, sortant du tube guide barre 1, traverse une poupée mobile 3 entrainée en rotation et en translation axiale par des moyens d'entraînement sollicités par un moteur principal 4. Dans la poupée mobile 3 se trouve une pince de serrage qui tient la barre en cours d'usinage. En sortie de la poupée mobile 3 se trouve un ensemble porte-outil 5, portant des outils de tournage 6 dont la position est déterminée par un arbre à came 7. Au-delà de la zone occupée par les outils 6 se trouve un dispositif de guidage de barre 8. Au-delà de ce dispositif de guidage de barre 8 se trouve un ensemble de moyens de butée 9 contre lequel peut venir porter l'extrémité de la barre en cours d'usinage.

Dans le mode de réalisation représenté sur cette figure 1, le dispositif de guidage de barre 8 comprend une bascule 10 portant un logement 11 pour recevoir et retenir un canon de guidage. La bascule 10 peut se déplacer transversalement, sous l'action de la came 12, pour déplacer transversalement le logement 11 du canon entre une position alignée avec l'axe de la barre à usiner, et une position décalée transversalement.

Le canon de guidage selon l'invention peut s'adapter et être fixé sans jeu dans le logement 11 de canon.

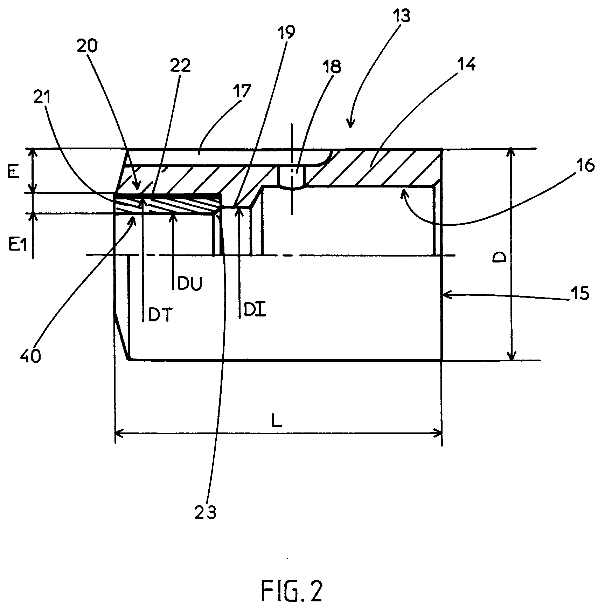

La figure 2 illustre un mode de réalisation de canon de guidage 13 selon l'invention, à diamètre fixe. Dans ce mode de réalisation, le canon 13 comprend un corps métallique 14, de longueur L sensiblement égale à la longueur du support 11 de canon, de forme extérieure généralement cylindrique de diamètre D s'adaptant à faible jeu dans un trou cylindrique axial correspondant du support de canon 11, et comportant une suite d'alésages axiaux successifs.

A partir de l'extrémité d'entrée 15 du canon 13, destinée à être orientée sur la machine à décolleter en direction de la poupée mobile 3, on trouve un alésage d'entrée 16 de diamètre supérieur au diamètre de la barre à usiner, occupant sensiblement la moitié de la longueur du canon 13. Cet alésage d'entrée 16 communique radialement avec une rainure extérieure 17 du corps 14 par un trou radial 18, la rainure 17 et le trou 18 permettant le passage d'huile de décolletage pendant l'usinage. On doit, de préférence, utiliser une huile appropriée permettant le décolletage de l'inox.

L'alésage d'entrée 16 se poursuit par un alésage intermédiaire 19, de diamètre DI légèrement supérieur au diamètre utile DU du canon.

L'alésage intermédiaire 19 se poursuit par un alésage terminal 20 du corps métallique 14, de diamètre DT.

A l'intérieur de l'alésage terminal 20 se trouve un tube cylindrique formant une couche intérieure en carbure de silicium 21. La couche intérieure en carbure de silicium 21 présente une surface intérieure cylindrique de révolution 40 dont le diamètre constitue le diamètre utile DU du canon 13. La surface intérieure cylindrique 40 de la couche intérieure 21 forme donc la surface de guidage ou d'appui contre laquelle vient porter une portion de la surface latérale externe de la barre en cours d'usinage. Le diamètre extérieur cylindrique du tube formant la couche intérieure 21 est très légèrement inférieur au diamètre DT de l'alésage terminal 20, pour s'adapter sensiblement sans jeu dans l'alésage terminal 20 et y être fixé par une couche intermédiaire de colle 22 schématiquement représentée.

De préférence, le diamètre DI de l'alésage intermédiaire 19 est légèrement supérieur au diamètre de la surface intérieure cylindrique de guidage 40, ou diamètre utile DU du canon. La différence entre le diamètre DI d'alésage intermédiaire et le diamètre DU de surface intérieure cylindrique de guidage 40 est inférieure à 0,4 mm environ. Ainsi, l'alésage intermédiaire 19 constitue un moyen de guidage de barre lors de sa pénétration dans le canon 13, et évite les risques de cassure de la couche intérieure 21 en carbure de silicium. Un chanfrein 23 peut également être prévu sur le bord d'entrée de la couche intérieure 21 en carbure de silicium.

Dans le mode de réalisation représenté, l'épaisseur E du corps métallique 14 au droit de la couche intérieure en carbure de silicium 21 est sensiblement égale à quatre fois l'épaisseur E1 de cette couche intérieure 21.

La couche de colle est avantageusement constituée du produit distribué par la société LOCTITE sous la référence S648.

On choisira de préférence un carbure de silicium présentant les caractéristiques physiques suivantes :
- dureté HV d'environ 30 000 MPa,
- matière sans porosité, homogène, à granulométrie fine,
- densité d'environ 3,1 g/cm³,
- module de flexion sur 3 points d'environ 400 MPa,
- coefficient de dilatation thermique d'environ 4,3 10⁻⁶/° C.

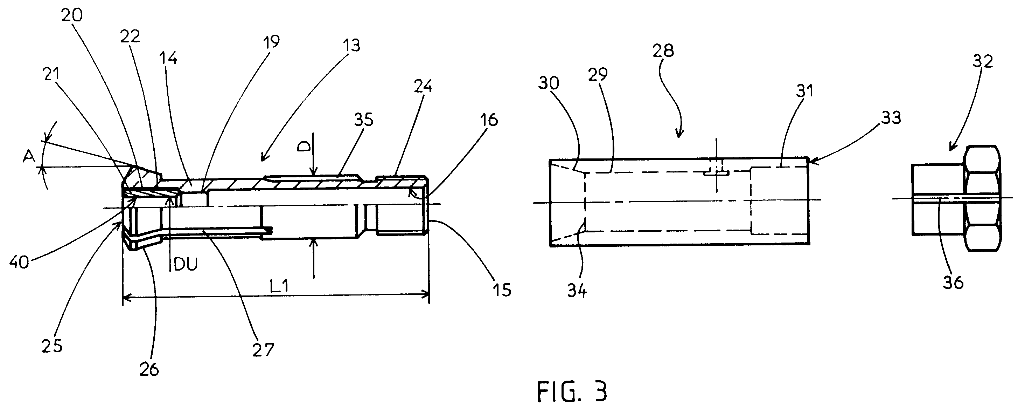

La figure 3 illustre un mode de réalisation de canon de guidage à diamètre réglable. Dans ce mode de réalisation, le canon 13 comprend également un corps métallique 14, avec un alésage d'entrée 16, un alésage intermédiaire 19, un alésage terminal 20, et une couche intérieure 21 en carbure de silicium solidarisée par une couche de colle 22 et présentant une surface intérieure cylindrique de guidage 40.

La surface extérieure du corps métallique 14 comprend, au voisinage de l'extrémité d'entrée 15, un filetage extérieur 24 et, au voisinage de l'extrémité de sortie 25 opposée, une portée conique 26, d'inclinaison A, à sommet orienté vers l'extrémité d'entrée 15. Le corps métallique 14 comprend en outre des fentes longitudinales 27 depuis l'extrémité de sortie 25 jusqu'à environ la moitié de sa longueur L1. Ainsi, les fentes longitudinales 27 sont plus longues que la zone occupée par la couche intérieure 21 en carbure de silicium. Les fentes longitudinales 27 sont ménagées non seulement dans l'épaisseur du corps métallique 14, mais également dans toute l'épaisseur de la couche intérieure 21 en carbure de silicium.

Le canon de guidage 13 est inséré dans une douille 28 coaxiale comprenant un alésage intérieur intermédiaire 29 recevant à faible jeu la partie centrale du canon de guidage 13. L'alésage intermédiaire 29 se raccorde, au voisinage de sa première extrémité 34, à une surface intérieure conique 30 conformée pour coopérer avec la portée conique 26 du canon de guidage 13. A l'autre extrémité de l'alésage 29 se trouve un alésage d'entrée 31 de diamètre supérieur. L'alésage d'entrée 31 permet l'adaptation d'un écrou 32 se vissant sur le filetage 24 et venant porter contre la face d'entrée 33 de la douille 28.

En vissant l'écrou 32, on provoque de façon connue le serrage de la partie fendue du canon de guidage 13, pour le réglage du diamètre intérieur utile DU du canon de guidage.

Une rainure longitudinale 35 de blocage est prévue sur la surface externe du canon 13, pour coopérer avec une clavette de la douille 28 assurant le blocage en rotation axiale du canon de guidage 13. Une fente longitudinale 36 est prévue dans la paroi latérale de l'écrou 32, pour autoriser sa déformation élastique radiale.

Les fentes 27 du canon de guidage 13 font office de rainures de graissage ou de lubrification.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de guidage de barre sur une machine à décolleter à poupée mobile, comprenant un canon de guidage (13) à canaux de lubrification et à surface intérieure cylindrique de guidage (40) dont le diamètre utile (DU) est fixe ou réglable,
- le canon de guidage (13) comprenant une couche intérieure (21) entourée d'un corps métallique (14), ladite couche intérieure (21) formant ladite surface intérieure cylindrique de guidage (40),
caractérisé en ce que :
- la couche intérieure (21) est realisèe en carbure de silicium et en ce qu'elle est solidarisée dans le corps métallique (14) par une couche intermédiaire de colle (22).

2. Dispositif de guidage selon la revendication 1, caractérisé en ce que l'épaisseur du corps métallique (E) au droit de la couche intérieure (21) en carbure de silicium est au moins le triple de l'épaisseur (E1) de la couche intérieure (21) en carbure de silicium.

3. Dispositif de guidage selon l'une des revendications 1 ou 2, caractérisé en ce que le canon (13) comprend un alésage intermédiaire (19) dont le diamètre (DI) est légèrement supérieur au diamètre utile (DU) de la surface intérieure cylindrique de guidage (40), la différence entre le diamètre d'alésage intermédiaire (DI) et le diamètre utile (DU) de surface intérieure cylindrique de guidage (40) étant inférieure à 0,4 mm environ.

4. Dispositif de guidage selon l'une quelconque des revendications 1 à 3, caractérisé en ce que la couche intérieure (21) en carbure de silicium est composée d'un carbure de silicium sans porosité, homogène, à granulométrie fine, de dureté HV voisine de 30 000 MPa et de module de flexion sur 3 points d'environ 400 MPa.

5. Dispositif de guidage selon l'une quelconque des revendications 1 à 4, caractérisé en ce que la colle assurant la solidarisation de la couche intérieure (21) en carbure de silicium dans le corps métallique (14) est une colle référencée S648 distribuée par la société LOCTITE.

## Claims

1. Bar guide device on an automatic lathe having a tailstock, including a guide bush (13) with lubrication passages and a cylindrical interior guide surface (40) the active diameter (DU) of which is fixed or adjustable,
- the guide bush (13) comprising an interior layer (21) surrounded by a metal body (14), said interior layer (21) forming said cylindrical interior guide surface (40),
characterised in that :
- the interior layer (21) is a layer of silicon carbide and in that it is fastened inside the metal body (14) by an intermediate layer of adhesive (22).

2. Guide device according to claim 1, characterised in that the thickness (E) of the metal body in line with the interior silicon carbide layer (21) is at least three times the thickness (E1) of the interior silicon carbide layer (21).

3. Guide device according to claim 1 or claim 2, characterised in that the bush (13) has an intermediate bore (19) the diameter (DI) of which is slightly greater than the active diameter (DU) of the cylindrical interior guide surface (40), the difference between the intermediate bore diameter (DI) and the active diameter (DU) of the cylindrical interior guide surface (40) being less than approximately 0.4 mm.

4. Guide device according to any one of claims 1 to 3, characterised in that the interior silicon carbide layer (21) is a layer of non-porous, homogeneous silicon carbide with a small particle size, a Vickers hardness of approximately 30 000 MPa and a three-point bending modulus of approximately 400 MPa.

5. Guide device according to any one of claims 1 to 4, characterised in that the adhesive fastening the interior silicon carbide layer (21) into the metal body (14) is a S648 adhesive distributed by the company LOCTITE.

## Patentansprüche

1. Stabführungsvorrichtung für einen Drehautomaten mit einem Reitstock bestehend aus einer Führungsbuchse (13) mit Schmierkanälen und einer zylinderförmigen inneren Führungsfläche (40), deren Drehdurchmesser (DU) konstant oder verstellbar ist,
- wobei die Führungsbuchse (13) aus einer mit einem Metallkörper (14) gefaßten Innenschicht (21) besteht, diese Innenschicht (21) bildet die zylinderförmige innere Führungsfläche (40),
dadurch gekennzeichnet, daß :
- die Innenschicht (21) aus Siliziumkarbid besteht und daß sie durch eine Zwischenklebeschicht (22) mit dem Metallkörper (14) verbunden ist.

2. Führungsvorrichtung gemäß Anspruch 1, dadurch gekennzeichnet, daß die Stärke (E) des Metallkörpers über der Innenschicht (21) aus Siliziumkarbid wenigstens die dreifache Dicke (E1) der Innenschicht (21) aus Siliziumkarbid beträgt.

3. Führungsvorrichtung gemäß Anspruch 1 oder 2, dadurch gekennzeichnet, daß die Buchse (13) eine Zwischenbohrung (19) aufweist, deren Durchmesser (DI) etwas größer als der Drehdurchmesser (DU) der zylinderförmigen inneren Führungsfläche (40) ist, wobei der Unterschied zwischen dem Zwischenbohrungsdurchmesser (DI) und dem Drehdurchmesser (DU) der zylinderförmigen inneren Führungsfläche (40) kleiner als ca. 0,4 mm ist.

4. Führungsvorrichtung gemäß einer der Ansprüche 1 bis 3, dadurch gekennzeichnet, daß die Siliziumkarbid-Innenschicht (21) aus einheitlichem porenfreiem Siliziumkarbid mit feiner Kornklassierung besteht und eine HV-Härte von ungefähr 30.000 MPa sowie ein Biegemodul an 3 Stellen von ungefähr 400 MPa aufweist.

5. Führungsvorrichtung gemäß einer der Ansprüche 1 bis 4, dadurch gekennzeichnet, daß der Kleber für die Befestigung der Siliziumkarbid-Innenschicht (21) im Metallkörper (14) ein Klebstoff mit der Bestellnummer S648 der Firma LOCTITE ist.
